# EUROPÄISCHE PATENTSCHRIFT

(11) **EP 3 750 200 B1**
(45) Veröffentlichungstag und Bekanntmachung des Hinweises auf die Patenterteilung: **06.04.2022**
(21) Anmeldenummer: 19849023.7
(22) Anmeldetag: 20.12.2019
(51) Int. Cl.: H01M 50/116, H01M 50/166, H01M 50/20, H01M 50/10

(54) **MEHRTEILIGES MULTIFUNKTIONALES BATTERIEGEHÄUSE**
MULTI-PART, MULTI-FUNCTIONAL BATTERY HOUSING
BOÎTIER DE BATTERIE MULTIFONCTION EN PLUSIEURS PARTIES

(30) Priorität: 21.12.2018 DE 102018133426
(43) Veröffentlichungstag der Anmeldung: 16.12.2020
(73) Patentinhaber: König Metall GmbH & Co. KG, 76571 Gaggenau (DE); TEB Dr. Kerspe GmbH, 69256 Mauer (DE)
(72) Erfinder: FISCHER, Michael, 76571 Gaggenau (DE); KERSPE, Jobst H., 69256 Mauer (DE)
(74) Vertreter: Geitz Truckenmüller Lucht Christ
(86) Internationale Anmeldenummer: PCT/DE2019/101111
(87) Internationale Veröffentlichungsnummer: WO 2020/125872

(56) Entgegenhaltungen:
- EP-A1- 2 565 958
- EP-B1- 2 985 804
- DE-A1- 10 319 350
- DE-A1-102016 106 021

## Beschreibung

Die vorliegende Erfindung betrifft ein Batteriegehäuse zur Aufnahme wenigstens eines Batteriemoduls in einem Fahrzeug, wobei das Batteriegehäuse aus einer doppelwandigen, vakuumdichten Hüllstruktur gebildet ist, die mit einem mikro- oder nanoporösen Füllmaterial ausgefüllt und von Gasen zumindest weitgehend evakuiert ist und welche einen Innenraum zur Aufnahme der wenigstens einen Batteriezelle einschließt.

Ein solches multifunktionales Batteriegehäuse ist bereits aus der EP 2 985 804 B1 vorbekannt. Derartige multifunktionale Batteriegehäuse werden insbesondere bei Elektro- und Hybridfahrzeugen für die Unterbringung der Fahrzeugbatterie eingesetzt. Hierbei sieht die Erfindung für die Herstellung des multifunktionalen Batteriegehäuses ein Material vor, das sich die thermischen Isoliereingeschaften des Vakuums zunutze macht. Hierzu wird eine Wand in Form eines vakuumdichten Hohlkörpers konstruiert, der aber zur Erhöhung der Festigkeit mit einem Füllmaterial aufgefüllt wird. Gleichzeitig wird der Hohlkörper in Bezug auf Gase evakuiert, so dass ein sowohl widerstandsfähiger, als auch thermisch gut isolierender Körper entsteht.

Das vorbekannte multifunktionale Batteriegehäuse hat in seiner bekannten Ausgestaltung jedoch auch Nachteile. Aufgrund der allseits gleichartigen Ausführung des multifunktionalen Batteriegehäuses wird dieses den unterdessen gestiegenen Anforderungen hinsichtlich des thermischen Verhaltens und der mechanischen Eigenschaften nicht vollständig gerecht.

Zur Einhaltung aller gesetzlichen Vorgaben und Anforderungen auch der Hersteller von Kraftfahrzeugen, insbesondere hinsichtlich Kriterien wie Brandschutz, Crashsicherheit, Thermomanagement, Unterboden- und Steinschlagschutz, sowie das Handling beim Ein- und Ausbauen der Batterie am Fahrzeug sind die Erfordernisse mit wachsender Verbreitung der genannten Fahrzeugtypen gestiegen und spezifischer geworden.

In diesem Zusammenhang ist aus der DE 10 2016 106 021 A1 ein Verfahren zur Herstellung eines Batteriegehäuses mittels der Herstellung eines Zwischenproduktes, umfassend eine untere und eine obere Halbschale, die anschließend miteinander unter Einschluss der Batterie miteinander verschweißt werden. Im Laufe des weiteren Verfahrens wird die Außenwandung der unteren Halbschale mit der Außenwandung der oberen Halbschale jeweils unter Zwischenlage einer gestützten Vakuumisolierung zwischen den Innen- und Außenwandungen der unteren und oberen Halbschale verschweißt.

Außerdem ist aus der DE 10 2014 645 A1 ein Batteriegehäuse zur Aufnahme eines oder mehrerer Zellblöcke einer Batterie bekannt. Dabei ist der Zwischenraum zwischen einer Außen- und einer Innenwand der einzelnen Zellblöcke jeweils mit einer gestützten Vakuumisolierung aus einem porösen Stützmaterial versehen.

Im Übrigen ist aus der DE 10 2012 214 964 A1 eine Batteriezelle mit einem elektrisch leitfähigen Zellengehäuse vorbekannt. Dabei ist die Außenseite dieses Batteriezellengehäuses mit einer an der Außenseite des Batteriezellengehäuses anhaftenden, elektischen Isolationsschicht versehen.

Aus dem Stand der Technik ist in diesem Zusammenhang auch die DE 10 2016 216050 A1 bekannt, welche das multifunktionale Batteriegehäuse in mehr oder minder drei Schichten unterteilt, nämlich ein wannenförmiges Bodenelement, ein umlaufendes Randelement und ein Deckelelement. Jedoch sind in dieser Lösung einige weitere Elemente wie eine Trägerstruktur oder eine zusätzliche innere Bodenwanne vonnöten, was auch hier die Montage recht kompliziert erscheinen lässt.

Die WO 2010/040520 A2 sieht einzelne Modultrennwände zwischen den Batteriemodulen vor, die aber nicht mit dem Gehäuse verbunden sind und damit ebenfalls mit zusätzlichem Aufwand händisch ergänzt werden müssen.

Bei der DE 10 2016 213 832 A1 hingegen sind die vorgesehenen Wände hohl und werden mit Kühlmittel durchströmt, so dass die Stabilität bei einem möglichen Zusammenstoß nicht gegeben ist.

Die DE 10 2013 015 837 A1 macht sich einen ähnlichen Gedanken zunutze wie die eingangs genannte EP 2 985 804 B1, indem eine Wabenstruktur eingesetzt wird, die dann mit einem brandhemmenden Medium befüllt wird. Auch hier werden darüber hinaus keine weiteren Maßnahmen zur Sicherung der Batteriezellen unternommen, eine allseits gleichartige Sicherung durch die Gehäusewand ist vorgesehen.

Die DE 10 2016 202 024 A1 hingegen erkennt die Notwendigkeit, eine sichere Lagerung der Batteriemodule zu gewährleisten und umgibt diese mit einem in dem eigentlichen Gehäuse aufgenommenen Schaumkörper.

Weiter geht die DE 10 2014 217 655 A1 von einem zweiteiligen Gehäuse aus, ebenso wie die DE 10 2016 116 729 A1, bei denen jeweils zwischen einem Deckel und einer Bodenwanne unterschieden wird.

Die DE 20 2016 100 629 U1 sieht eine Umhausung aus federnden zylindrischen Körpern vor, die rings um die Seitenflächen der Batteriemodule angeordnet sind.

Aus der DE 10 2015 224 777 A1 ist es bekannt, Verstärkungsstreben zwischen den Batteriemodulen einzusetzen, die bei einem Aufprall Schaden von diesen abwenden sollen. Mit dem gleichen Ziel schlägt die EP 3 041 063 A2 vor, die Batteriemodule zwischen Schaumstoffkörpern einzulegen, um sie allseits sowohl thermisch als auch mechanisch zu schützen.

Einen besonderen Schutz gegen Beschädigungen von der Unterseite her sehen die bekannten Lösungen jedoch nicht vor, insbesondere keinen integrierten Schutz, der im Herstellungsprozess des Fahrzeugs und/oder des multifunktionalen Batteriegehäuses sinnvoll und einfach herbeigeführt werden kann.

Vor diesem Hintergrund liegt der vorliegenden Erfindung die Aufgabe zu Grunde, ein mehrteiliges multifunktionales Batteriegehäuse zu schaffen, bei dem sowohl die thermischen als auch mechanische Anforderungen sowie Umweltschutzfunktionen berücksichtigt werden. Ferner soll sich das vorgeschlagene multifunktionale Batteriegehäuse zur Vermeidung oder zumindest Verzögerung sowohl hinsichtlich innerer, also in der Batterie selbst auftretender Brände, welche auf das Fahrzeug übergreifen, als auch äußerer Brände, welche auf die Batterie übergreifen könnten, hergerichtet sein. Ferner sollte das multifunktionale Batteriegehäuse eine Langzeit-Temperaturstabilität gewährleisten, um die Batterie unabhängig von den Umgebungstemperaturen betreiben zu können. Dabei soll das multifunktionale Batteriegehäuse als Teil der Fahrzeugstruktur konzipiert und umgesetzt sein.

Dies gelingt durch ein multifunktionales Batteriegehäuse gemäß den Merkmalen des unabhängigen Anspruchs 1, bei dem das multifunktionale Batteriegehäuse in geteilter Bauweise konstruiert wird, wobei jeder Teil des multifunktionalen Batteriegehäuses an seinen spezifischen Aufgabenbereich angepasst wird. Weitere Ausgestaltungen dieser Bauweise sind in den sich anschließenden abhängigen Ansprüchen ausgeführt.

Erfindungsgemäß ist es vorgesehen, dass das multifunktionale Batteriegehäuse in drei oder mehr Teile unterteilt ist, nämlich in ein Bodenelement, wenigstens ein umlaufendes Randelement und ein Deckelelement, welche alle drei als gestützte Vakuumisolierung (GVI) ausgeführt sind. Das Randelement ist ein zu einem Rahmen gebogenes Hohlprofil, welches vakuumdicht verschweißt, mit mikro- oder nanoporösem Füllmaterial ausgefüllt und evakuiert ist. Die beiden übrigen Teile des multifunktionalen Batteriegehäuses sind hingegen aus einer doppelwandigen, vakuumdichten Hüllstruktur hergestellt, die mit einem mikro- oder nanoporösen Füllmaterial ausgefüllt und in einem isolierenden Betriebszustand von Gasen zumindest weitgehend evakuiert ist. Die drei Gehäuseteile sind miteinander verbunden und bilden so einen Innenraum, welcher der Aufnahme und Fixierung der Zellen bzw. Batteriemodule dient.

Insbesondere können hierbei die Hüllstruktur aus einem dünnwandigen Edelstahl hergestellt sein und als Füllmaterial wird ein hochverdichtetes Stützgerüst aus feinen künstlichen Mineralfasern mit einem Faserdurchmesser überwiegend im Bereich 2 bis 6 µm, ein Silikatschaumgranulat oder Glaspulver verwendet werden.

Das Randelement verbessert die Crashsicherheit des gesamten Gehäuses, dient der passiven Klimatisierung und erfüllt einen vermittelnden Zweck für das Boden- und das Deckelelement. Außerdem weist das Rahmen-/Randelement als GVI-Struktur erhebliches Leichtbaupotenzial gegenüber bekannten Rahmenstrukturen auf. Über das Randelement werden zum einen das Deckelelement und das Bodenelement miteinander verbunden, zum anderen wird das Gehäuse hierüber mit dem Fahrzeug verbunden. Es handelt sich um den Teil, der die Gesamtkonstruktion trägt und die Kräfte im Fall eines Zusammenstoßes aufnimmt. Durch die Ausgestaltung des Randelementes in GVI-Technologie weist dieses auch bei geringen Wanddicken der metallischen Umhüllung eine sehr hohe Steifigkeit auf und kann daher hohe mechanische Belastungen aufnehmen. Während auf dem Randelement ein Deckelelement aufliegt, das in der einfachsten Ausgestaltungsform das Gehäuse nur nach oben abschließt, sieht das Bodenelement vor, die Batteriemodule zu tragen. Über im Bodenelement eingeklebte Spannbügel lassen sich die Batteriemodule im Bodenelement verankern. Gegen Beschädigungen der Batterie von der Unterseite her, wie etwa durch Steinschlag, ist die Bodenfläche zu schützen.

Hierzu ist die Bodenfläche des Bodenelements auf der Außenseite, also der vom Innenraum abgewandten Seite, jedoch innerhalb der Doppelwandstruktur, mit einem Armierungsgewebe überzogen, welches eventuell eindringende Steine sicher zurückhalten soll. Die Außenfläche des Bodenelementes ist als zusätzlicher Steinschlagschutz mit einer schlagzähen Fasermatte belegt, die entweder als Ganzes, etwa durch Kleben, auf die Fläche aufgebracht, oder aber durch Beflockung, Eintauchen oder dergleichen mehr an das Bodenelement angeformt ist. Diese Gesamtkonstruktion bildet damit einen dreifachen Steinschlagschutz, welcher die Batteriezellen vor mechanischer Beschädigung schützt. Die außen aufgebrachte Fasermatte kann zudem als hochtemperaturfeste Brandschutzschicht ausgebildet sein und so einen Schutz gegen äußere Brände darstellen.

Auf der Innenseite des Bodenelements ist zudem eine Kühlfläche angeordnet, die fester Bestandteil der Innenwand der Hüllstruktur ist und eine Kühlung der auf dem Bodenelement stehenden Batteriemodule ermöglicht.

Die Bodenplatte schützt die Batteriemodule somit insbesondere vor mechanischen Einwirkungen von der Unterseite her, wobei eine passive Kühlung durch die Ausgestaltung der evakuierten Wandstruktur als regelbare Wärmedämmerung möglich ist. Die in die Innenwand der Wandstruktur integrierte Kühlfläche ermöglicht zudem eine aktive Kühlung mit Ableitung überschüssiger, exothermer Wärme aus dem Batteriemodul. Durch die Integration der Kühlfläche in die Wandstruktur des Bodenelements sowie das ebenfalls integrierte Armierungsgewebe sind die aktiven Kühlelemente zudem sicher gegen Beschädigungen und Auslaufen geschützt und von den Batteriezellen separiert.

Bei dem Einbau des vorliegenden multifunktionalen Batteriegehäuses ist es somit möglich, die weiter bestehenden Anforderungen ohne zusätzliche Konstruktionselemente zu erfüllen, es ist vielmehr ausreichend, die genannten drei Teile zusammenzufügen und die Batteriemodule mit dem Bodenelement zu verbinden, so dass der Einbau des erfindungsgemäßen multifunktionalen Batteriegehäuses gegenüber dem bekannten Stand der Technik sowohl vereinfacht ist, als auch zu einem besseren Ergebnis führt.

Dies gilt umso mehr für die weiteren Ausgestaltungsformen, die im Folgenden dargelegt sind. So kann die Kühlung der Batteriemodule weiter verbessert werden, indem auch dem Deckelelement eine zweite Kühlfläche zugeordnet wird, die ebenfalls Bestandteil der Innenwand der Hüllstruktur ist. Dadurch sind die Batteriemodule zwischen zwei aktiven Kühlelementen in Deckelement und Bodenelement aufgenommen. Weiter kann dies verbessert werden, wenn von dem Deckelelement abwärts und/oder von dem Bodenelement aufwärts zusätzliche Wärmeleitbleche oder flächige aktiv gekühlte Kühlfinnen zwischen den einzelnen Batteriemodulen eingeschoben werden. Des Weiteren können diese Kühlfinnen auf ihrer von den Batteriezellen abgewandten Seite mit einer brandhemmenden, wärmedämmenden und temperaturfesten Beschichtung versehen sein, um im Fall des Thermal-run-aways einer Batteriezelle das Überspringen der Temperaturen auf die Nachbarzelle zu verhindern. Diese Beschichtung ist bevorzugt aus hochtemperaturfesten mineralischen Fasern, Glimmer oder Vermiculit oder aus einer Kombination dieser Stoffe hergestellt. Auch das Deckelelement kann mit einer regelbaren Wärmedämmung zur passiven Kühlung ausgestattet werden.

Eine aktive Kühlung erfordert es, dass eine Wärmesenke über einen geschlossenen Kühlmittelkreis verbunden wird, der auch durch die in die Innenwand integrierten Kühlelemente und/oder Kühlfinnen hindurch verläuft. Hierbei kann unter anderem über die Durchflussgeschwindigkeit des Kühlmittels durch den Kühlmittelkreis der Grad der Kühlung beeinflusst und bedarfsweise auch ein Regelkreis aufgebaut werden. Die Kühlmittelzuleitungen können mittels vakuumdichter Durchführungen an die Kühlelemente und Kühlfinnen angeschlossen werden.

Nachdem das umlaufende Randelement für die Befestigung und Montage der Gesamtkonstruktion vorgesehen ist, können diesem Befestigungsmittel zugeordnet sein. Hierbei können Fahrzeugbefestigungsmittel zur Befestigung des Randelements am Fahrzeugrahmen dienen, sowie Bodenbefestigungsmittel bzw. Deckelbefestigungsmittel zur Befestigung ebendieser Teile des multifunktionalen Batteriegehäuses an dem Randelement.

Zunächst besteht die Möglichkeit, das multifunktionale Batteriegehäuse zur thermischen Isolierung der Batterie zum Zwecke der Aufrechterhaltung der lebensnotwendigen Batterietemperatur einzusetzen. Bei einem kritischen Temperaturanstieg der Batterietemperatur kann die Dämmwirkung der einzelnen Elemente des multifunktionalen Batteriegehäuses verringert werden. Insbesondere bei einem großen thermischen Gefälle zwischen den Batteriemodulen im Inneren und der Umgebung außerhalb des multifunktionalen Batteriegehäuses eine Beeinflussung der Wärmedämmung vorgesehen sein. Dann wird in den gasevakuierten Hohlraum mittels geeigneter Zuführmittel ein wärmeleitendes Gas in die Hüllstruktur der Gehäuseteile eingebracht, so dass zwischen den Innen- und Außenwänden die Wärmeleitung vermittels des Gases verbessert und überschüssige Wärme abgeführt werden kann. Auch hier kann insbesondere eine Regelung aufgebaut werden, die neben den bereits genannten Maßnahmen auch hier eingreifen kann.

Zur Befestigung der einzelnen Batteriemodule in dem Innenraum des multifunktionalen Batteriegehäuses können Spannbänder zur Umschließung und Fixierung der Module in das Bodenelement eingeklebt werden. Dies ermöglicht eine einfache, schnelle und sichere Montage der Batteriemodule, wobei bedarfsweise für die einzuschiebenden, mit dem Deckelelement verbundenen Kühlelemente genügend Platz freizuhalten ist.

Bei dem Armierungsgitter, welches unterhalb des Innenraums in dem Bodenelement eingebettet ist, kann es sich vorzugsweise um ein metallisches Drahtgitter handeln, insbesondere um ein feines Edelstahlgewebe oder ein Kevlargewebe, das als integrierter Steinschlagschutz für das Bodenelement des multifunktionalen Batteriegehäuses dient.

Je nach Bauhöhe von Randelement und den Seitenwandungen des Bodenelements, sowie der in dem multifunktionalen Batteriegehäuse anzuordnenden Batteriemodule kann das Deckelelement als ebenes Deckelelement oder mit einer sich unter einer Deckelfläche forterstreckenden, umlaufenden Seitenwandung ausgeführt sein. Weist das Deckelelement eine umlaufende Seitenwandung auf, so erlaubt das multifunktionale Batteriegehäuse hierdurch einen höheren Aufbau eines multifunktionalen Batteriegehäuses zur Aufnahme einer höheren Batterie und/oder zur zusätzlichen Aufnahme von HV-Steuerelementen. Durch diese beiden Ausgestaltungsformen und insbesondere durch unterschiedlich hohe Randelemente können verschieden hoch ausgeführte multifunktionale Batteriegehäuse realisiert werden.

Für den Fall, dass während des Betriebs oder einer Fehlfunktion gasförmige Reaktionsprodukte aus den Batteriezellen austreten und sich im multifunktionalen Batteriegehäuse ein Überdruck aufbaut, kann in dessen Außenwand ein Auslassventil vorgesehen sein, das vorzugsweise im Deckelelement angeordnet werden kann. Ein solches Einwegventil erlaubt ein Ausströmen des Gases bei Überdruck, schließt aber anschließend bei Druckausgleich wieder.

In diesem Zusammenhang kann dem Auslassventil ein Filterelement zugeordnet sein, welches eine chemische Abgasbindung ermöglicht, wie beispielsweise ein Aktivkohlefilter oder Kombination aus einem Feinstfilter, z.B. mineralisches Filterpapier oder Faservlies zur Aerosolbindung und einer adsorbierenden Komponente wie etwa Aktivkohle.

Die vorstehend beschriebene Erfindung wird im Folgenden anhand eines Ausführungsbeispiels näher erläutert.

### Es zeigen

- Figur 1: ein umlaufendes Randelement als Teil eines multifunktionalen Batteriegehäuses aus einer Hüllstruktur, in einer Draufsicht und einer frontalen Querschnittsdarstellung,
- Figur 2: ein Bodenelement als Teil eines multifunktionalen Batteriegehäuses in einer frontalen Querschnittsdarstellung,
- Figur 3: ein Deckelelement als Teil eines multifunktionalen Batteriegehäuses in einer frontalen Querschnittsdarstellung, sowie
- Figur 4: ein multifunktionales Batteriegehäuse umfassend ein Bodenelement gemäß Figur 2, ein Deckelelement gemäß einer Variante der Figur 3 und ein dazwischen liegendes umlaufendes Randelement gemäß Figur 1 in einer frontalen Querschnittsdarstellung.

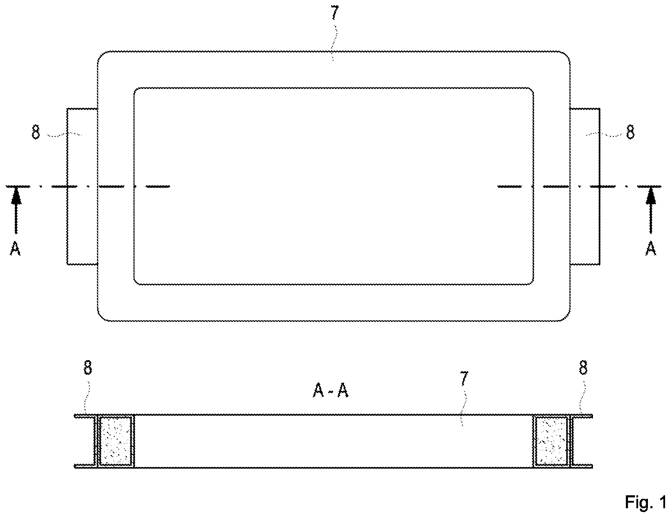

Figur 1 zeigt zunächst ein umlaufendes Randelement 7, welches mehr oder minder die Mitte eines erfindungsgemäßen multifunktionalen Batteriegehäuses 1 darstellt. Bei der Montage eines solchen multifunktionalen Batteriegehäuses 1 in ein Fahrzeug kann zunächst das umlaufende Randelement 7 an dem Fahrzeugrahmen befestigt werden, wozu es Befestigungsmittel 8 in Form eines U-förmigen Schraubflanschs aufweist. Eine Befestigung kann in bekannter Art und Weise durch eine Verschraubung 14 mittels eines Befestigungsmittels 8 an jedem der drei Elemente der Konstruktion realisiert werden. Einmal im Fahrzeug montiert, kann anschließend ein Bodenelement 3 von unten her an dem Randelement 7 befestigt werden. Bei dem Randelement 7 handelt es sich um ein in Form gebogenes Hohlprofil, welches mit Füllstoff/Stützstruktur befüllt, vakuumdicht verschweißt und evakuiert ist, wodurch es seine mechanische Steifigkeit sowie auch die wärmedämmernde Wirkung erhält. Die Wanddicken des Hohlprofils sind gering, vorzugsweise 1 bis 2 mm, je nach zu erwartender Beanspruchung. Die vorgeschlagene Konstruktion bringt damit die Möglichkeit mit sich, als Leichtbaukonstruktion hergestellt zu werden.

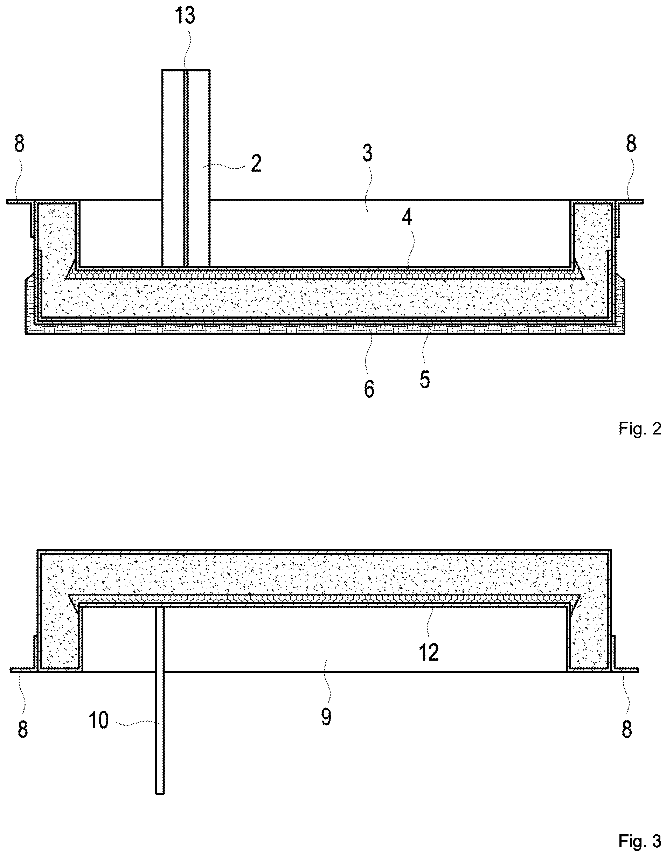

Ein solches Bodenelement 3 ist in Figur 2 dargestellt. Wie das Randelement 7 besteht das Bodenelement 3 aus einer doppelwandigen, vakuumdichten Hüllstruktur, die mit einem mikro- oder nanoporösen Füllmaterial ausgefüllt und von Gasen zumindest weitgehend evakuiert ist. In der Figur 2 ist ein einzelnes Batteriemodul 2 dargestellt, das in das Bodenelement 3 eingeklebt ist. Nachdem das Bodenelement 3 eine über einer Bodenfläche aufragende Seitenwand aufweist, bildet es eine Art Wanne, in der die Batteriemodule 2 Platz finden und vorzugsweise mittels Spannbändern 13 fixiert werden. Eine Befestigung mit dem Randelement 7 erfolgt mithilfe eines an dem Befestigungsmittel 8 des Randelements 7 anzulegenden L-förmigen Befestigungselements 8 des Bodenelements. Vorzugsweise erfolgt die Verbindung durch eine Verschraubung 14.

In aller Regel werden die Batteriemodule in Fahrzeugen, wie auch der Tank in Benzin- und Dieselbetriebenen Fahrzeugen, weit unten angeordnet, nicht zuletzt wegen der hierdurch günstigen Schwerpunktlage des Fahrzeugs. Dadurch ist das multifunktionale Batteriegehäuse jedoch von der Straße während der Fahrt hochspritzendem Material ausgesetzt, darunter auch Steinen, die gegen das multifunktionale Batteriegehäuse schlagen können, sofern das Fahrzeug auf der Unterseite keine Abdeckung besitzt.

Um deren Einwirkung auf die Gehäusewand zu mindern, ist dem Bodenelement 3 sowohl ein Armierungsgewebe 5 aus Edelstahl, als auch eine schlagzähe Fasermatte 6 zugeordnet, welche die Unterseite des Bodenelements 3 schützen. Das Armierungsgewebe 5 ist hierbei im Inneren der Gehäusestruktur an der Außenwand angeordnet.

Ferner weist das Bodenelement 3 eine erste Kühlfläche 4 auf, welche Teil der inneren Wand ist und einerseits der Aufnahme und Verteilung der exothermen Wärme der Batterie dient, um sie als passive Kühlung im Fall der regelbaren Wärmedämmung über die Gehäusestruktur abzuführen. Andererseits kann die erste Kühlfläche 4 aber auch als aktiver Wärmewandler ausgelegt werden und bei Durchströmung mit Kühlmedium und Anschluss an ein externes Kühlaggregat Teil einer aktiven Kühlung sein.

Figur 3 zeigt ferner ein Deckelelement 9, welches gemeinsam mit dem Randelement 7 und dem Bodenelement 3 einen Innenraum zur Aufnahme der Batteriemodule 2 bilden. Auch hier weist das Deckelelement eine zweite Kühlfläche 12 auf, analog zu der ersten Kühlfläche 4 des Bodenelements 3.

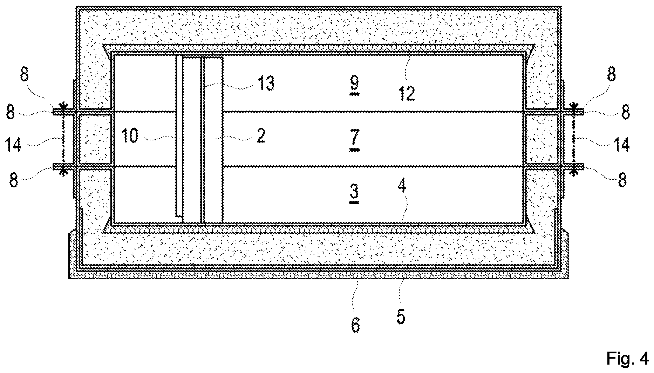

In Figur 4 sind schließlich alle Teile des multifunktionalen Batteriegehäuses 1 zusammengesetzt. Zudem weist in diesem Beispiel das Deckelelement 9 sowohl eine Reihe von Kühlelementen 10 auf als auch eine aktive Kühlung, bei der die Kühlelemente 10 des Deckelelements 9 aus einem geschlossenen Kühlkreislauf, dessen Ende hier nicht gezeigt ist, gespeist wird. Ebenfalls im Bild der Figur 4 nicht zu erkennen ist, dass die Kühlelemente 10 von einer einzigen, in Schleifen durchlaufenden Kühlmittelschleife durchzogen sind, die in der Draufsicht wie Sackgassen aussehen. Es erfordert jedoch eine durchgehende Schleife, um einen Rückstau in den Leitungsenden zu vermeiden. Über ihre jeweiligen Befestigungsmittel 8, die untereinander durch eine Verschraubung 14 verbunden sind, werden die einzelnen Elemente aneinander gehalten. Vorstehend beschrieben ist somit ein multifunktionales Batteriegehäuse, welches in geteilter Bauweise konstruiert wird, wobei jeder Teil des multifunktionalen Batteriegehäuses an seinen spezifischen Aufgabenbereich angepasst wird und das aus den einzelnen Baugruppen zusammengesetzte Batteriegehäuse eine multifunktionale Einheit bildet. Zu den Funktionen des multifunktionalen Batteriegehäuses gehören ein aktives und passives Thermomanagement, eine rüttelsichere Fixierung der Zellen bzw. Module in dem multifunktionalen Batteriegehäuse sowie die Befestigung der kompletten Batterie in der Fahrzeugstruktur, der Schutz der Zellen gegen äußere mechanische Kräfte im Fall eines Crashs oder eines Steinschlags, ein Brandschutz gegen innere und äußere Brände, eine Auslaufsicherung und damit einhergehender Umweltschutz gegenüber austretenden Zellkomponenten, insbesondere Elektrolyt, sowie eine EMV-Sicherheit, da das multifunktionale Batteriegehäuse als allseitiger Faradayscher Käfig ausgebildet ist.

### BEZUGSZEICHENLISTE

- 1: multifunktionales Batteriegehäuse
- 2: Batteriemodul
- 3: Bodenelement
- 4: erste Kühlfläche
- 5: Armierungsgewebe
- 6: Fasermatte
- 7: Randelement
- 8: Befestigungsmittel
- 9: Deckelelement
- 10: Kühlfinne
- 11: Kühlmittelleitung
- 12: zweite Kühlfläche
- 13: Spannband
- 14: Verschraubung

## Patentansprüche

1. Batteriegehäuse zur Aufnahme wenigstens eines Batteriemoduls (2) in einem Fahrzeug, wobei das Batteriegehäuse (1) aus einer doppelwandigen, vakuumdichten Hüllstruktur gebildet ist, die mit einem mikro- oder nanoporösen Füllmaterial ausgefüllt und von Gasen zumindest weitgehend evakuiert oder evakuierbar ist und welche einen Innenraum zur Aufnahme des wenigstens einen Batteriemoduls (2) einschließt, **dadurch gekennzeichnet, dass** das Batteriegehäuse mehrteilig und multifunktional ausgestaltet ist, indem die Hüllstruktur ein wannenförmiges Bodenelement (3) mit einer über einer Bodenfläche aufragenden, umlaufenden Seitenwandung, ein auf der umlaufenden Seitenwandung aufliegendes umlaufendes Randelement (7), sowie ein auf dem umlaufenden Randelement (7) aufliegendes Deckelelement (9) umfasst, wobei dem Bodenelement (3) auf dessen dem Innenraum zugewandten Seite wenigstens eine in der Hüllstruktur vakuumdicht integrierte erste Kühlfläche (4) und auf der vom Innenraum abgewandten Seite ein von einer schlagfesten Fasermatte (6) überzogenes Armierungsgewebe (5) zugeordnet ist.

2. Batteriegehäuse gemäß Anspruch 1, **dadurch gekennzeichnet, dass** dem Deckelelement (9) auf der dem Innenraum zugewandten Seite ebenfalls wenigstens eine vakuumdicht in die Hüllstruktur integrierte zweite Kühlfläche (12) zugeordnet ist.

3. Batteriegehäuse gemäß einem der Ansprüche 1 oder 2, **dadurch gekennzeichnet, dass** dem Deckelelement (9) und/oder dem Bodenelement (3) jeweils auf der dem Innenraum zugewandten Seite wenigstens eine zwischen einzelnen Batteriemodulen (2) in den Innenraum einragende Kühlfinne (10) zugeordnet und mit der jeweiligen Kühlfläche (4, 12) wärmeleitend verbunden ist.

4. Batteriegehäuse gemäß einem der vorhergehenden Ansprüche,
**dadurch gekennzeichnet, dass** zumindest einzelne der Kühlflächen (4, 12) und Kühlfinnen (10) aktiv gekühlt sind, wobei diese mit einem Kühlmittel über wenigstens eine in der Hüllstruktur des Bodenelements (3) und/oder Deckelelements (9) verlegte Kühlmittelleitung (11) versorgt wird.

5. Batteriegehäuse gemäß einem der Ansprüche 3 oder 4, **dadurch gekennzeichnet, dass** die wenigstens eine Kühlfinne zumindest auf ihrer von dem Batteriemodul (2) abgewandten Seite mit einer brandhemmenden, wärmedämmenden und temperaturfesten Beschichtung, versehen ist.

6. Batteriegehäuse gemäß einem der vorhergehenden Ansprüche,
**dadurch gekennzeichnet, dass** an dem umlaufenden Randelement (7) Befestigungsmittel (8) zur Befestigung an einem Rahmen des Fahrzeugs, und/oder zur Verbindung mit dem Bodenelement (3) und/oder dem Deckelelement (9) angeordnet sind.

7. Batteriegehäuse gemäß einem der vorhergehenden Ansprüche,
**dadurch gekennzeichnet, dass** die Hüllstruktur zur Ausbildung einer regelbaren Wärmedämmung Mittel zum Einbringen wärmeleitender Gase in das Innere der Hüllstruktur sowie Mittel zum Evakuieren der wärmeleitenden Gase aus der Hüllstruktur aufweist.

8. Batteriegehäuse gemäß einem der vorhergehenden Ansprüche,
**dadurch gekennzeichnet, dass** in dem Innenraum eine Mehrzahl von Batteriemodulen (2) angeordnet und an der Innenwand der Hüllstruktur (3) fixiert sind.

9. Batteriegehäuse gemäß Anspruch 8, **dadurch gekennzeichnet, dass** die Spannbänder mit dem Bodenelement (3) verklebt oder verschweißt sind.

10. Batteriegehäuse gemäß einem der vorhergehenden Ansprüche,
**dadurch gekennzeichnet, dass** das Armierungsgewebe (5) ein metallisches Drahtgitter oder Kevlargewebe ist.

11. Batteriegehäuse gemäß einem der vorhergehenden Ansprüche,
**dadurch gekennzeichnet, dass** das Deckelelement (9) eine sich unter einer Deckelfläche forterstreckende, umlaufende Seitenwandung aufweist.

12. Batteriegehäuse gemäß einem der vorhergehenden Ansprüche,
**dadurch gekennzeichnet, dass** dem Deckelelement (9) ein Auslassventil zum Auslassen von Reaktionsabgasen aus havarierten Batteriezellen in die Umgebung zugeordnet ist.

13. Batteriegehäuse gemäß Anspruch 12, **dadurch gekennzeichnet, dass** dem Auslassventil ein kombiniertes Filterelement bestehend aus einem Feinfilter zur Abscheidung von Aerosolen sowie einem Adsorptionsmaterial zur Bindung von Schadstoffen zugeordnet ist.

14. Batteriegehäuse gemäß einem der vorhergehenden Ansprüche,
**dadurch gekennzeichnet, dass** die zumindest aus einem Bodenelement, einem umlaufenden Randelement und einem Deckelelement gebildete Hüllstruktur jedes der genannten Einzelelemente aus einem austenitischen Edelstahl vakuumdicht hergestellt ist und als Füllmaterial ein hochverdichtetes Mineralfaserbord oder Silikatschaumgranulat oder ein Pulver aus Mikro-Hohlglaskugeln oder eine Kombination der genannten Füllmaterialien eingesetzt wird.

## Claims

1. Battery case for accommodating at least one battery module (2) in a vehicle, the battery case (1) being formed from a double-walled, vacuum-tight casing structure which is filled with a microporous or nanoporous filling material and at least largely evacuated or able to be evacuated of gases and which includes an interior for accommodating the at least one battery module (2), **characterized in that** the battery case is designed in multiple parts and is multifunctional, by the casing structure comprising a trough-shaped bottom element (3) having a peripheral side wall which projects above a bottom surface, a peripheral edge element (7) which rests on the peripheral side wall, and a cover element (9) which rests on the peripheral edge element (7), the bottom element (3) being associated, on its side facing the interior, with at least one first cooling surface (4) which is integrated into the casing structure in a vacuum-tight manner and being associated, on the side facing away from the interior, with a reinforcement fabric (5) which is covered by an impact-resistant fiber mat (6).

2. Battery case according to claim 1, **characterized in that** the cover element (9) is also associated, on the side facing the interior, with at least one second cooling surface (12) which is integrated into the casing structure in a vacuum-tight manner.

3. Battery case according to either claim 1 or claim 2, **characterized in that** the cover element (9) and/or the bottom element (3) is in each case associated, on the side facing the interior, with at least one cooling fin (10) which projects into the interior (2) between individual battery modules and is heat-conductively connected to the relevant cooling surface (4, 12).

4. Battery case according to any of the preceding claims, **characterized in that** at least some of the cooling surfaces (4, 12) and cooling fins (10) are actively cooled, these being supplied with a coolant via at least one coolant line (11) routed in the casing structure of the bottom element (3) and/or the cover element (9).

5. Battery case according to either claim 3 or claim 4, **characterized in that** the at least one cooling fin is provided with a fire-retardant, heat-insulating and temperature-resistant coating at least on its side facing away from the battery module (2).

6. Battery case according to any of the preceding claims, **characterized in that** fastening means (8) for fastening to a frame of the vehicle and/or for connecting to the bottom element (3) and/or the cover element (9) are arranged on the peripheral edge element (7).

7. Battery case according to any of the preceding claims, **characterized in that** the casing structure has means for introducing heat-conductive gases into the interior of the casing structure and means for evacuating the heat-conductive gases from the casing structure in order to develop controllable heat insulation.

8. Battery case according to any of the preceding claims, **characterized in that** a plurality of battery modules (2) are arranged in the interior and fixed to the inner wall of the casing structure (3).

9. Battery case according to claim 8, **characterized in that** the tightening straps are glued or welded to the bottom element (3).

10. Battery case according to any of the preceding claims, **characterized in that** the reinforcement fabric (5) is a metal wire mesh or Kevlar fabric.

11. Battery case according to any of the preceding claims, **characterized in that** the cover element (9) has a peripheral side wall which extends beneath a cover surface.

12. Battery case according to any of the preceding claims, **characterized in that** the cover element (9) is associated with an outlet valve for releasing reaction gases from damaged battery cells into the surroundings.

13. Battery case according to claim 12, **characterized in that** the outlet valve is associated with a combined filter element consisting of a fine filter for separating aerosols and an adsorption material for binding pollutants.

14. Battery case according to any of the preceding claims, **characterized in that** the casing structure of each of the mentioned individual elements, said structure being formed at least from a bottom element, a peripheral edge element and a cover element, is made from austenitic stainless steel in a vacuum-tight manner, and a highly compressed mineral fiber board or silicate foam granules or a powder of micro-hollow glass spheres or a combination of the mentioned filling materials is used as a filling material.

## Revendications

1. Boîtier de batterie permettant de loger au moins un module de batterie (2) dans un véhicule, le boîtier de batterie (1) étant formé d'une structure d'enveloppe à double paroi étanche au vide qui est remplie d'un matériau de remplissage microporeux ou nanoporeux et au moins largement évacuée ou capable d'être évacuée de gaz et qui possède un espace intérieur permettant de loger l'au moins un module de batterie (2), **caractérisé en ce que** le boîtier de batterie est conçu en plusieurs parties et est multifonctionnel, **en ce que** la structure d'enveloppe comprend un élément de base (3) en forme de cuve comportant une paroi latérale circonférentielle faisant saillie au-dessus d'une surface de base, un élément de bord circonférentiel (7) reposant sur la paroi latérale circonférentielle et un élément de couverture (9) reposant sur l'élément de bord circonférentiel (7), au moins une première surface de refroidissement (4) étanche au vide et intégrée dans la structure d'enveloppe étant associée à l'élément de fond (3) sur sa face tournée vers l'espace intérieur, et un tissu de blindage (5) revêtu d'un mat en fibres résistant aux chocs (6) étant associé à l'élément de fond sur la face opposée à l'espace intérieur.

2. Boîtier de batterie selon la revendication 1, **caractérisé en ce qu'**au moins une seconde surface de refroidissement (12) étanche au vide et intégrée dans la structure d'enveloppe est également associée à l'élément de couvercle (9) sur la face tournée vers l'espace intérieur.

3. Boîtier de batterie selon l'une des revendications 1 ou 2, **caractérisé en ce qu'**au moins une ailette de refroidissement (10) faisant saillie dans l'espace intérieur entre certains modules de batterie (2) est associée à l'élément de couvercle (9) et/ou à l'élément de base (3), respectivement sur la face tournée vers l'espace intérieur, et est reliée thermiquement à la surface de refroidissement (4, 12) respective.

4. Boîtier de batterie selon l'une des revendications précédentes, **caractérisé en ce qu'**au moins certaines des surfaces de refroidissement (4, 12) et des ailettes de refroidissement (10) sont activement refroidies, celles-ci étant alimentées avec un liquide de refroidissement par l'intermédiaire d'au moins une conduite de liquide de refroidissement (11) localisée dans la structure d'enveloppe de l'élément de base (3) et/ou de l'élément de couvercle (9).

5. Boîtier de batterie selon l'une des revendications 3 ou 4, **caractérisé en ce que** l'au moins une ailette de refroidissement est pourvue d'un revêtement ignifuge, calorifuge et résistant à la température au moins sur sa face opposée au module de batterie (2).

6. Boîtier de batterie selon l'une des revendications précédentes, **caractérisé en ce que** des moyens de fixation (8) pour la fixation à un châssis du véhicule et/ou pour le raccordement à l'élément de base (3) et/ou à l'élément de couvercle (9) sont disposés au niveau de l'élément de bord circonférentiel (7).

7. Boîtier de batterie selon l'une des revendications précédentes, **caractérisé en ce que** la structure d'enveloppe présente des moyens permettant d'introduire des gaz thermiquement conducteurs à l'intérieur de la structure d'enveloppe ainsi que des moyens permettant d'évacuer les gaz thermiquement conducteurs hors de la structure d'enveloppe, afin de former une isolation thermique régulable.

8. Boîtier de batterie selon l'une des revendications précédentes, **caractérisé en ce qu'**une pluralité de modules de batterie (2) sont disposés dans l'espace intérieur et fixés à la paroi intérieure de la structure d'enveloppe (3).

9. Boîtier de batterie selon la revendication 8, **caractérisé en ce que** les bandes de serrage sont collées ou soudées à l'élément de base (3).

10. Boîtier de batterie selon l'une des revendications précédentes, **caractérisé en ce que** le tissu de blindage (5) est un treillis métallique ou un tissu Kevlar.

11. Boîtier de batterie selon l'une des revendications précédentes, **caractérisé en ce que** l'élément de couvercle (9) présente une paroi latérale circonférentielle qui s'étend sous une surface de couvercle.

12. Boîtier de batterie selon l'une des revendications précédentes, **caractérisé en ce qu'**une soupape de libération permettant de libérer des gaz d'échappement de réaction hors de cellules de batterie endommagées dans l'environnement est associée à l'élément de couvercle (9).

13. Boîtier de batterie selon la revendication 12, **caractérisé en ce qu'**un élément filtrant combiné composé d'un filtre fin permettant la séparation d'aérosols ainsi que d'un matériau d'adsorption permettant la liaison de polluants est associé à la soupape de sortie.

14. Boîtier de batterie selon l'une des revendications précédentes, **caractérisé en ce que** la structure d'enveloppe de chacun des éléments individuels mentionnés, laquelle est formée au moins d'un élément de fond, d'un élément de bord circonférentiel et d'un élément de couvercle, est réalisée étanche au vide en un acier inoxydable austénitique et un panneau de fibres minérales fortement comprimé ou des granulés de mousse de silicate ou une poudre de microsphères de verre creuses ou une combinaison des matériaux de remplissage mentionnés est utilisé comme matériau de remplissage.
